# EUROPEAN PATENT APPLICATION

(11) **EP 2 698 948 A1**
(43) Date of publication of application: **19.02.2014**
(21) Application number: 12771254.5
(22) Date of filing: 06.04.2012
(51) Int. Cl.: H04L 12/26

(54) **METHOD AND DEVICE FOR DETERMINING FAILURE ELIMINATION BASED ON OAM PROTOCOL**

(30) Priority: 14.04.2011 CN 201110093908
(71) Applicant: ZTE Corporation, Shenzhen, Guangdong 518057 (CN)
(72) Inventor: CHEN, Chunlei, Shenzhen Guangdong 518057 (CN); QIAN, Yong, Shenzhen Guangdong 518057 (CN)
(74) Representative: Modiano, Micaela Nadia
(86) International application number: PCT/CN2012/073609
(87) International publication number: WO 2012/139477

(57) **Abstract**

Disclosed is a method for determining failure elimination based on the operation, Administration and maintenance (OAM) protocol, including: judging whether or not a failure of a link has occurred by detecting an OAM session; when it is detected that the failure of the link has occurred, setting identifcation information of the failure corresponding to the OAM session; when session scanning time arrives, setting identification information of a scanning round number corresponding to the OAM session according to the set identification information of the failure, and clearing the identification information of the failure; and when the next session scanning time arrives, determining whether or not the failure is eliminated according to the identification information corresponding to the failure and the identification information corresponding to the scanning round number. Also disclosed is a device for determining failure elimination based on the OAM protocol. By applying the method and device in the present invention, it is possible to solve the problems in the prior art that the number of OAM sessions is limited and a large amount of physical storage space is occupied when determining failure elimination using hardware timers.

## Description

### Technical Field

The present invention relates to the technical field of data communications, and particularly, to a method and device for determining failure elimination based on the Operation, Administration and Maintenance (OAM) protocol.

### Background Art

With the development of carrier-grade Ethernet technology, the importance of carrier-grade OAM technology has also been highlighted. A variety of OAM protocols also comes up in the industry, for example: Connectivity Fault Management (CFM) protocol, Transport Multi-protocol Label Switching (T-MPLS) OAM protocol and MPLS-Transport Profile (TP) OAM protocol, and so on.

Based on the above-mentioned various types of OAM protocols, a link failure can be detected using a configured Maintenance association End Point (MEP), with the specific detection process including: the MEP periodically sends and receives a detection message, compares information carried in a received detection message with locally configured MEP information, and detects cross connection, MEP ID failure, periodical failure and various other link failures based on the result of the comparison. Based on the OAM protocol, when a link failure is detected, it is required to start a timer for the failure, and if the failure is not eliminated within a time range of the timer, the timer starts over again, and if the timer times out, then it is determined that the failure is eliminated, wherein the time range is determined according to a period parameter "interval" carried in the message and is usually 3.5 times the value of "interval".

Based on the OAM protocol, a detection period is generally of ms level, such as 3.3 ms, 10 ms or 100 ms, etc., and therefore the precision of the timer is required to correspondingly achieve the ms level, while the timer supporting the ms level can only be realized by hardware, At the same time, multiple types of failures, usually 3 to 5 types, can be detected based on the OAM protocol, and it is required to configure one timer for each type of failure. For example, 4 types of failures can be detected based on a certain OAM protocol, then 4 hardware timers need to be configured for each OAM session. However, hardware resources are limited, and the number of timers will limit the number of OAM sessions, while in the hardware table an index also needs to be assigned to each timer, thereby increasing the physical storage space and the difficulty to achieve same.

In practical application, it is required to report an alarm in time when a failure is detected. This is because the occurrence of a failure means that the detected link fails, and in order to prevent service interruption, the service over the link needs to be switched to a protection link. In fact, the alarm regarding failure elimination does not need to have high timeliness. This is because the service has been switched to the protection link, or other measures have been adopted to ensure the normal operation of the service, therefore using hardware timers of ms level at this moment not only increases the burden of the system, limits the number of OAM sessions, but also occupies a large amount of physical storage space.

### Summary

On that account, disclosed in the present invention is a method and device for determining failure elimination based on the OAM protocol, so as to solve the problems in the prior art that the number of OAM sessions is limited and a large amount of physical storage space is occupied when determining failure elimination using hardware timers.

Embodiments of the present invention provide a method for determining failure elimination based on the OAM protocol, including:
judging whether or not a failure of a link has occurred by detecting an OAM session;
when it is detected that the failure of the link has occurred, setting identification information of the failure corresponding to the OAM session;
when session scanning time arrives, setting identification information of a scanning round number corresponding to the OAM session according to the set identification information of the failure, and clearing the identification information of the failure; and
when the next session scanning time arrives, determining whether or not the failure is eliminated according to the identification information corresponding to the failure and the identification information corresponding to the scanning round number.

Embodiments of the present invention provide a device for determining failure elimination based on the OAM protocol, including:
a detection module, configured to judge whether or not a failure of a link has occurred by detecting an OAM session;
a first setting module, configured to set identification information of the failure corresponding to the OAM session when it is detected that the failure of the link has occurred;
a second setting module, configured to, when session scanning time arrives, set identification information of a scanning round number corresponding to the OAM session according to the set identification information of the failure and clear the identification information of the failure; and
a determination module, configured to, when the next session scanning time arrives, determine whether or not the failure is eliminated according to the identification information corresponding to the failure and the identification information corresponding to the scanning round number.

Embodiments of the present invention provide a method and device for determining failure elimination based on the OAM protocol, in which when it is determined by detecting the OAM session that a link has failed, identification information of the failure corresponding to an OAM session is set, when the scanning time arrives, identification information of a scanning round number corresponding to the OAM session is set according to the set identification information of the failure, when the next scanning time arrives, it is determined whether or not the failure is eliminated according to the identification information corresponding to the scanned failure and the identification information corresponding to the scanning round number. In the embodiments of the present invention, whether or not a failure is eliminated is determined, at each session scan, by detecting the identification information corresponding to the failure and the identification information corresponding to the scanning round number, without the need to determine whether or not the failure is eliminated via hardware timers, thereby reducing the storage space occupied by hardware timer index entries. In addition, since the present invention does not need to provide corresponding number of timers for each OAM session, the number of OAM sessions can be arbitrarily adjusted, which improves the flexibility of the system.

### Brief Description of the Drawings

Drawings, provided for further understanding of the present invention and forming a part of the present invention, are used to explain the present invention together with the illustrative embodiments and description of the present invention rather than to limit the present invention.
Fig. 1 is a flow chart for realizing a method for determining failure elimination based on the OAM protocol provided in an embodiment of the present invention;
Fig. 2 is a structural schematic diagram of a device for determining failure elimination based on the OAM protocol provided in an embodiment of the present invention; and
Fig. 3 is a schematic flow chart of the method for determining failure elimination based on the OAM protocol provided in an embodiment of the present invention.

### Detailed Description of the Embodiments

In order to reduce the dependence on hardware timers, reduce the storage space occupied by timer index entries, and improve the flexibility of the system, the embodiments of the present invention provide a method and device for determining failure elimination based on the OAM protocol. The method determines whether or not a failure is eliminated, at each session scan, by detecting identification information corresponding to the failure and identification information corresponding to the scanning round number, without the need to determine whether or not the failure is eliminated via hardware timers, thereby reducing the storage space occupied by hardware timer index entries. Moreover, since it is not required to provide corresponding number of timers for each OAM session, the number of OAM sessions can be arbitrarily adjusted, which improves the flexibility of the system.

In order to make the technical problems to be solved by the present invention, the technical solutions and the beneficial effect more clear, the present invention will be described in further detail below in conjunction with the accompanying drawings and embodiments. It should be understood that the specific embodiments described herein are merely used to explain the present invention, but not to limit the present invention.

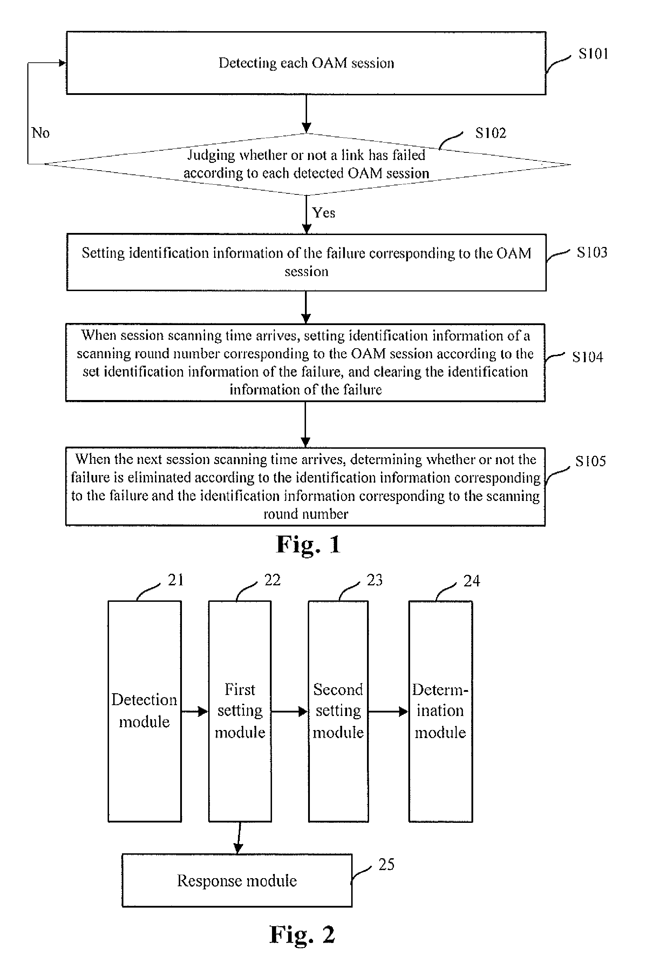

Fig. 1 is a flow chart for realizing a method for determining failure elimination based on the OAM protocol provided in an embodiment of the present invention. The flow includes the steps as follows.

S101: Each OAM session is detected.

S102: It is judged whether or not a link has failed via each detected OAM session, and when it is determined that the link has failed, step S103 is executed; otherwise, return to step S101.

Herein, it is possible to judge whether or not the link has failed based on a configured MEP.

S103: Identification information of the failure corresponding to the OAM session is set (Set-Bit).

Herein, the operation of setting the identification information of the failure corresponding to the OAM session can be realized by a hardware module.

S104: When session scanning time arrives, identification information of a scanning round number corresponding to the OAM session is set according to the set identification information of the failure, and the identification information of the failure is cleared (Clear-Bit).

S105: When the next session scanning time arrives, it is determined whether or not the failure is eliminated according to the identification information corresponding to the failure and the identification information corresponding to the scanning round number.

In the embodiment of the present invention, the identification information corresponding to each type of link failure is provided in each OAM session, and when it is determined that there is a corresponding link failure, the identification information corresponding to the failure is set. In addition, in the embodiment of the present invention, a corresponding session scanning period is also provided for each OAM session and the OAM session information is scanned when the session scanning time arrives; when the identification information corresponding to a certain failure of the OAM session is set, identification information of a corresponding scanning round number of the OAM session is set and then the identification information of the failure is cleared. When the next session scanning time arrives, whether or not the failure is eliminated is determined according to the identification information corresponding to the failure and the identification information corresponding to the scanning round number.

In the embodiment of the present invention, since identification information corresponding to each failure is provided for each session, and identification information of session scanning round number corresponding to the session is also provided, whether or not the failure is eliminated can be determined by detecting the identification information corresponding to the failure and the identification information corresponding to the scanning round number when the session scanning time arrives. In this way, the embodiment of present invention does not need to determine whether or not the failure is eliminated via hardware timers, thereby reducing the storage space occupied by hardware timer index entries. Moreover, since it is not required to provide corresponding number of timers for each OAM session, the number of OAM sessions can be arbitrarily adjusted, which improves the flexibility of the system.

Fig. 2 is a structural schematic diagram of a device for determining failure elimination based on the OAM protocol, the device including: a detection module, a first setting module, a second setting module and a determination module; wherein
the detection module 21 is configured to judge whether or not a link has failed by detecting an OAM session;
the first setting module 22 is configured to set identification information of the failure corresponding to the OAM session when it is detected that the link has failed;
the second setting module 23 is configured to, when session scanning time arrives, set identification information of a scanning round number corresponding to the OAM session according to the set identification information of the failure and clear the identification information of the failure; and
the determination module 24 is configured to, when the next session scanning time arrives, determine whether or not the failure is eliminated according to the identification information corresponding to the failure and the identification information corresponding to the scanning round number.

The detection module 21 can realize the function of judging whether or not a link has failed by detecting an OAM session via a hardware module.

The first setting module 22 can also realize the function of setting the identification information of the failure corresponding to the OAM session via the hardware module.

The device further includes:
a response module 25, configured to report a detected failure event to an alarm response process and make an alarm response for the failure via the alarm response process.

After the response module makes an alarm response for the failure,
the detection module 21 is further configured to not report the failure event to the alarm response process again when the failure is detected via the OAM session again and the identification information corresponding to the failure is set.

The determination module 24 is specifically configured to determine that the failure is not eliminated when it is detected that the identification information corresponding to the failure is set and the identification information corresponding to the scanning round number is set; and to determine that the failure is eliminated when it is detected that the identification information corresponding to the failure is not set and the identification information corresponding to the scanning round number is set.

Specifically, when the embodiments of the present invention determine whether or not a failure is eliminated based on OAM, the device for determining failure elimination based on OAM can be located in an MEP or other network devices. The device specifically uses a combination of software and hardware for determining failure elimination, the specific implementations thereof is described as follows.

An alarm response process and a session scanning process are set via a software module, wherein the session scanning process scans an OAM session at an interval of a set scanning period T, that is, a scan process is carried out for the OAM session when the session scanning time arrives. Additionally, in the embodiments of the present invention, with respect to each OAM session, corresponding identification information is assigned for each type of link failure that needs to be detected. For example, the identification information assigned for a cross-link failure may be xconErr. In order to realize the determination of failure elimination, it is also required in the embodiments of the present invention to assign, for each OAM session, the identification information about the scanning round number. For example, the identification information about the scanning round number may be roundNum.

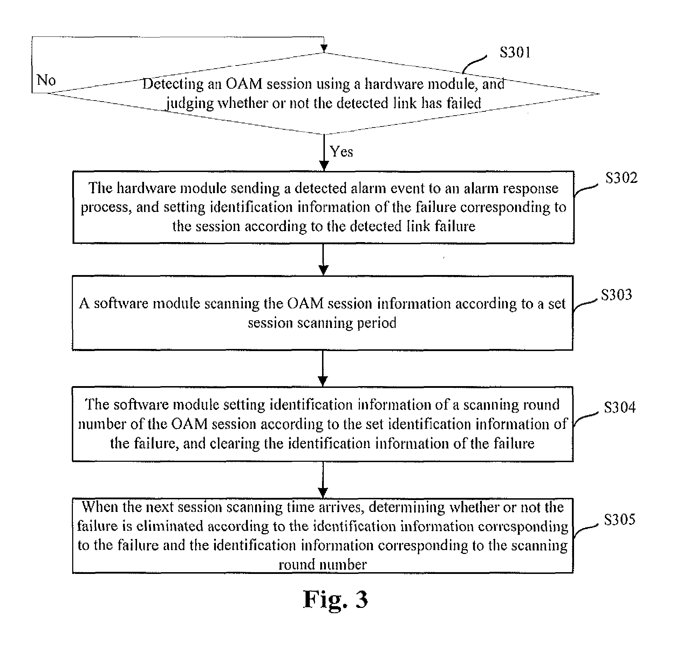

Fig. 3 is a schematic flow chart of the method for determining failure elimination based on the OAM protocol provided in an embodiment of the present invention. The process includes the steps as follows.

S301: An OAM session is detected using a hardware module, and it is judged whether or not the detected link has failed, and if it is determined that the link has failed, step S302 is executed; otherwise, proceed with step S301.

S302: The hardware module sends a detected alarm event to an alarm response process, and sets the identification information of the failure corresponding to the session according to the detected link failure.

Specifically, an alarm notification is sent to the alarm response process by the hardware module.

At this moment, since the hardware module has notified and reported the alarm about the cross-link failure to the alarm response process, that is, the alarm event has been reported, and the hardware module is also constantly detecting the OAM session to determine whether or not the link has failed, when the hardware module detects the failure again with respect to the OAM session and the identification information corresponding to the failure is set, the hardware module will not report the failure event to the alarm response process again.

S303: A software module, such as a CPU, scans the OAM session information according to the set session scanning period.

In the embodiment of the present invention, a corresponding session scanning period is set for each OAM session, and the same scanning period can be set for all the sessions, so as to scan the OAM session information when the session scanning time arrives.

S304: The software module sets the identification information of the scanning round number corresponding to the OAM session according to the set identification information of the failure, and clears the identification information of the failure.

S305: When the next session scanning time arrives, it is determined whether or not the failure is eliminated according to the identification information corresponding to the failure and the identification information corresponding to the scanning round number.

Specifically, the procedure of determining whether or not the failure is eliminated according to the identification information corresponding to the failure and the identification information corresponding to the scanning round number includes: when it is detected that the identification information corresponding to the failure is set and the identification information corresponding to the scanning round number is set, it is determined that the failure is not eliminated; and when the identification information corresponding to the failure is not set and the identification information corresponding to the scanning round number is set, it is determined that the failure is eliminated.

A specific embodiment is described below, where the detected link failure is a cross-link failure, the identification information corresponding to the cross-link failure of the OAM session is xconErr, the identification information corresponding to the scanning round number is roundNum, the hardware module is, for example, a network processor (NP), and the software module is, for example, a CPU.

When the NP detects from the OAM session that the failure in the link is a cross-link failure, the NP sends an alarm notification to the alarm response process, and the alarm response process responds to the alarm and sets the identification information xconErr corresponding to the cross-link failure of the OAM session. Then the NP will not send an alarm notification to the alarm response process again when the cross-link failure is detected according to the OAM session and the identification information xconErr corresponding to the cross-link failure of the OAM session is set.

When the scanning time arrives, the CPU scans the OAM session information according to the set session scanning period T, when it is detected that the identification information xconErr corresponding to the cross-link failure of the OAM session is set, the CPU sets the identification information roundNum corresponding to the scanning round number of a certain OAM session and tries to eliminate the link failure, that is, clear xconErr.

After one session scanning period T and when the next session scanning arrives, the CPU scans the OAM session again and determines that the cross-link failure is eliminated when the identification information xconErr corresponding to the cross-link failure is not set and the identification information roundNum corresponding to the scanning round number is set; determines that the cross-link failure is not eliminated when the identification information xconErr corresponding to the cross-link failure is set and the identification information roundNum corresponding to the scanning round number is set; and does not perform any operation when the identification information xconErr corresponding to the cross-link failure is not set and the identification information roundNum corresponding to the scanning round number is not set.

In the embodiment of the present invention, the session scanning period can be configured to be equal to and greater than 3.5 times the value of the common maximum OAM message sending period, for example, the session scanning period can be set as 350 ms and above, which will not impose excessive burden on the CPU at this moment, and additionally, the number of session scanning times (session scanning round number) performed by the CPU can be flexibly set according to the need.

Specifically, in the embodiment of the present invention, an OAM session is detected, and upon receiving an OAM message, the NP detects the content of the message, judges whether or not there is a failure, and if no failure is detected, skips all the processing, waits for the next message, and detects the message.

Upon determining, by detecting the OAM message, that the corresponding OAM session is already in the failure state, the NP notifies the software module that a failure is detected on the current OAM session. The hardware module waits for the next message and detects the message.

Upon receiving the notification sent by the hardware module, the software module sets a failure status flag corresponding to the relevant OAM session, to indicate that the OAM session is already in the failure state.

When it is determined that the failure is eliminated, the CPU scans the OAM session information, examines the failure state corresponding to the specific OAM session, and determines whether or not the OAM session is in the failure state. When it is determined that the OAM session is in the failure state, the corresponding failure status flag of the OAM session in the hardware table is cleared, and the scanning round number is set to be 1; and if the session is not in the failure state but the scanning round number is not zero, then it is determined that the failure is eliminated and the scanning round number is cleared.

Whether or not the failure is eliminated is determined according to the scanning round number and the failure state. When the failure status flag is set, the scanning round number is cleared.

Furthermore, the scanning round number can be increased to enhance the strength of the criterion for failure elimination. That is to say, when it is determined that the session is not in the failure state and the scanning round number is not zero, add 1 to the scanning round number; and when the value of the scanning round number increases to a set value, it is determined that the failure is eliminated.

Since in the embodiments of the present invention, whether or not a failure is eliminated can be determined, at each session scan, by detecting the identification information corresponding to the failure and the identification information corresponding to the scanning round number, without the need to determine whether or not the failure is eliminated via hardware timers, thereby reducing the storage space occupied by hardware timer index entries. Moreover, since it is not required to provide corresponding number of timers for each OAM session, the number of OAM sessions can be arbitrarily adjusted. In addition, it is not required to increase hardware timers for other types of link failures, which improves the flexibility of the system.

The embodiments of the present invention provide a method and device for determining failure elimination based on the OAM protocol, in which the identification information of the failure corresponding to an OAM session is set when it is determined that a link has failed by detecting the OAM session, and when the scanning time arrives, the identification information of the scanning round number corresponding to the OAM session is set according to the set identification information of the failure and at the same time the identification information of the failure is cleared, when the next scanning time arrives, it is determined whether or not the failure is eliminated according to the identification information corresponding to the scanned failure and the identification information corresponding to the scanning round number.

In the embodiments of the present invention, whether or not a failure is eliminated is determined, at each session scan, by detecting the identification information corresponding to the failure and the identification information corresponding to the scanning round number, without the need to determine whether or not the failure is eliminated via hardware timers, thereby reducing the storage space occupied by hardware timer index entries. In addition, since the present invention does not need to provide corresponding number of timers for each OAM session, the number of OAM sessions can be arbitrarily adjusted, which improves the flexibility of the system.

The above description shows and describes the preferred embodiments of the present invention, but as mentioned previously, it should be understood that the present invention is not limited to the form disclosed herein and should not be seen as excluding other embodiments, but may be used for various other combinations, modifications, and environments and is capable of changes within the scope of vision of the invention described herein by way of the above teachings or technology or knowledge of related arts. In addition, the modifications and variations conducted by a person skilled in the art without departing from the spirit and scope of the present invention should all be within the scope of protection of the appended claims of the present invention.

## Claims

1. A method for determining failure elimination based on an Operation, Administration and Maintenance (OAM) protocol, **characterized by** comprising:
judging whether or not a failure of a link has occurred by detecting an OAM session;
when it is detected that the failure of the link has occurred, setting identification information of the failure corresponding to the OAM session;
when session scanning time arrives, setting identification information of a scanning round number corresponding to the OAM session according to the set identification information of the failure, and clearing the identification information of the failure; and
when the next session scanning time arrives, determining whether or not the failure is eliminated according to the identification information corresponding to the failure and the identification information corresponding to the scanning round number.

2. The method as claimed in claim 1, **characterized in that** after detecting that the failure of the link has occurred, the method further comprises: reporting a detected failure event to an alarm response process and making an alarm response for the failure via the alarm response process.

3. The method as claimed in claim 2, **characterized in that** after making the alarm response for the failure, the method further comprises:
not reporting the failure event to the alarm response process again when the failure of the link is detected via the OAM session again and the identification information corresponding to the failure is set.

4. The method as claimed in claim 1, 2 or 3, **characterized in that** determining whether or not the failure is eliminated according to the identification information corresponding to the failure and the identification information corresponding to the scanning round number comprises:
when it is detected that the identification information corresponding to the failure is set and the identification information corresponding to the scanning round number is set, determining that the failure is not eliminated; and
when it is detected that the identification information corresponding to the failure is not set and the identification information corresponding to the scanning round number is set, determining that the failure is eliminated.

5. A device for determining failure elimination based on an Operation, Administration and Maintenance (OAM) protocol, **characterized by** comprising: a detection module, a first setting module, a second setting module and a determination module, wherein
the detection module is configured to judge whether or not a failure of a link has occurred by detecting an OAM session;
the first setting module is configured to set identification information of the failure corresponding to the OAM session when it is detected that the failure of the link has occurred;
the second setting module is configured to, when session scanning time arrives, set identification information of a scanning round number corresponding to the OAM session according to the set identification information of the failure and clear the identification information of the failure; and
the determination module is configured to, when the next session scanning time arrives, determine whether or not the failure is eliminated according to the identification information corresponding to the failure and the identification information corresponding to the scanning round number.

6. The device as claimed in claim 5, **characterized by** further comprising:
a response module, configured to report a detected failure event to an alarm response process and make an alarm response for the failure via the alarm response process.

7. The device as claimed in claim 6, **characterized in that** after the response module makes the alarm response for the failure, the detection module is further configured to not report the failure event to the alarm response process again when the failure is detected via the OAM session again and the identification information corresponding to the failure is set.

8. The device as claimed in claim 5, 6 or 7, **characterized in that** the determination module is configured to determine whether or not the failure is eliminated according to the identification information in the following manner:
the determination module is configured to determine that the failure is not eliminated when it is detected that the identification information corresponding to the failure is set and the identification information corresponding to the scanning round number is set; and
the determination module is configured to determine that the failure is eliminated when it is detected that the identification information corresponding to the failure is not set and the identification information corresponding to the scanning round number is set.
